Europäisches Patentamt

(19) **European Patent Office** ·

Office européen des brevets

(11) Publication number: **0 043 554**
A1

(12) # EUROPEAN PATENT APPLICATION

(21) Application number: **81105106.9**

(22) Date of filing: **01.07.81**

(51) Int. Cl.³: **F 02 C 3/08,** F 02 C 3/10

(30) Priority: **02.07.80 US 165289**

(43) Date of publication of application: **13.01.82**
**Bulletin 82/2**

(84) Designated Contracting States: **CH DE FR GB IT LI NL SE**

(71) Applicant: **PRATT & WHITNEY AIRCRAFT OF CANADA LIMITED, 1000 Marie Victorin boulevard, Longueuil Quebec (CA)**

(72) Inventor: **Stoten, Michael Donald, 270 McCraney Street West, Oakville Ontario L6H 3B4 (CA)**

(74) Representative: **Casalonga, Axel et al, BUREAU D.A. CASALONGA OFFICE JOSSE & PETIT Lilienstrasse 77, D-8000 München 80 (DE)**

(54) Gas turbine engine.

(57) A gas turbine engine having two compressor spools including in each spool centrifugal compressors (14, 16) driven by respective turbine stages. Each of the compressors are in series, the exhaust of the first compressor (14) being the input of the second compressor (16). A third turbine stage (76, 74) is provided which is directly connected to a shaft (S3) adapted for mechanical work. The spools including the centrifugal compressors (14, 16) are mounted on independent concentric shafts (S1, S2).

# 0043554

## Gas turbine engine

The present invention relates to gas turbine engines, and particularly to a multi-spool type engine.

It is well recognized that increasing the pressure ratio of the air exhausting from a compressor in a gas turbine engine increases the efficiency of the engine, particularly during optimum operating conditions. However, it is also known that surge conditions must be avoided during "off design" operations, such as during idling and low engine speed operation.

In order to meet these requirements, engines have been designed which have two spools, that is, a low pressure compressor stage is mounted on a shaft which in turn mounts a stage of turbine blades, while a first stage of turbine blades is mounted to an independent coaxial shaft on which is mounted the high pressure compressor. In this way, the high pressure stages can be independently rotated at higher velocities and the low pressure stages at lower power requirements. These engines have been well developed in the prior art as described in U.S. Patents 2,430,399, Heppner, 1947 ; 2,611,532, Ljungström, 1952 ; 2,803,943, Rainbow, 1957 ; 3,357,176, Williams, 1967 ; 3,273,340, Hull, Jr., 1966 ; 3,548,597, Etessam, 1970 ; 3,729,957, Petrie et al, 1973 ; and 3,861,139, Jones, 1975. These patents, with the exception of 3,357,176, Williams, utilize axial compressors.

Williams suggests the use of an axial compressor for the low pressure stage and a centrifugal compressor for the high pressure stage. All of the prior art engines are relatively large engines, and thus the axial compressor concept is feasible.

Axial compressors are made up of rotors including radially extending blades. When such engines are scaled down to below 4000 horsepower, the blades correspondingly become tiny. Axial compressor blades, for instance, on the high pressure stage, would be no larger than a fingernail in size,

thus rendering the blades ineffective in relation to the airflow.

Thus, where high pressure ratios (36:1) are possible on large fan engines using two spool axial compressor designs, it is not presently known to operate small gas turbine engines with pressure ratios higher than 12:1 since it was only thought possible to use single shaft compressors in such engines.

In the Williams patent, the axial compressor of the first stage, although larger than the second stage, would still be of such a size that the blades would be too delicate to ingest normal debris encountered in flight, such as hail, grit, birds, etc.

It is an aim of the present invention to provide a small, multi-spool gas turbine engine having the capability of air pressure ratios in the area of 15:1 but with variable flow capabilities for "off design" conditions.

It is an aim of the present invention to provide a small, compact, efficient, inexpensive, gas turbine engine of the multi-spool variety having relatively large compressor blades.

A construction of the present invention comprises an engine, an inlet for admitting air into the engine, a low pressure centrifugal compressor mounted on a first shaft, diffuser means extending circumferentially about the centrifugal compressor, duct means for redirecting the compressed fluid exhausting from said diffuser to the axial inlet of a second high pressure centrifugal compressor, said second centrifugal compressor being mounted on a second shaft concentric with the first shaft, diffuser means extending circumferentially about said second centrifugal compressor, means directing said compressed fluid to an annular combustion chamber surrounding said shafts, a turbine rotor mounted on said second shaft and forming a spool with said second shaft and said second centrifugal compressor, and a second turbine rotor mounted to said first shaft and said first centrifugal compressor.

In a more specific embodiment of the present invention, a third turbine rotor is provided mounted to a third shaft extending concentrically and centrally of the first and second shafts and adapted to be connected to a transmission means.

Among the advantages of the present invention is the fact that the blades of the centrifugal compressors are relatively large, and thus the first compressor stage downstream of the inlet is more apt to ingest debris than a scaled-down axial compressor including a plurality of small scaled-down blades. The high pressure compressor stage is a centrifugal compressor and has larger blades and is more apt to be effective on the airflow than comparable miniaturized axial compressor blades.

Properly designed ducting from the diffuser of the first centrifugal compressor is formed as a series of pipes which redirect the flow and inject the resultant flow from the low pressure compressor axially and at a proper angle, to the incidence of the blades of the high pressure compressor, thereby improving the efficiency of the two centrifugal compressor stages.

It is evident from such a construction, that is, using centrifugal compressors, that since a major component of the compressor extends in a radial plane, the overall length of the two spool compressor and thus the engine would be much shorter than a comparable scaled-down two-stage axial compressor, thereby contributing to the compactness of the engine. It is further evident that in the light of the impeller blades using the centrifugal compressors, fewer parts are required as compared to a similar size, two-stage, axial compressor, gas turbine, two spool engine, Of course, shorter gas turbine design means shorter hollow shafts making up the various spools, thereby increasing the dynamic stability of the shaft in operation.

Having thus generally described the nature of the invention, reference will now be made to the accompanying drawings, showing by way of illustration, a preferred embodiment thereof, and in which :

Figure 1 is a fragmentary axial cross-section showing the compression stages of a combustion chamber and turbine stages of a gas turbine in accordance with the present invention ;

Figure 2 is an enlarged detailed view of the second centrifugal compressor and a first turbine rotor making up the spool including the second shaft ; and

Figure 3 is an enlarged detailed fragmentary view, similar to Figure 2, but showing the first centrifugal compressor stage and the second turbine both mounted on the first shaft.

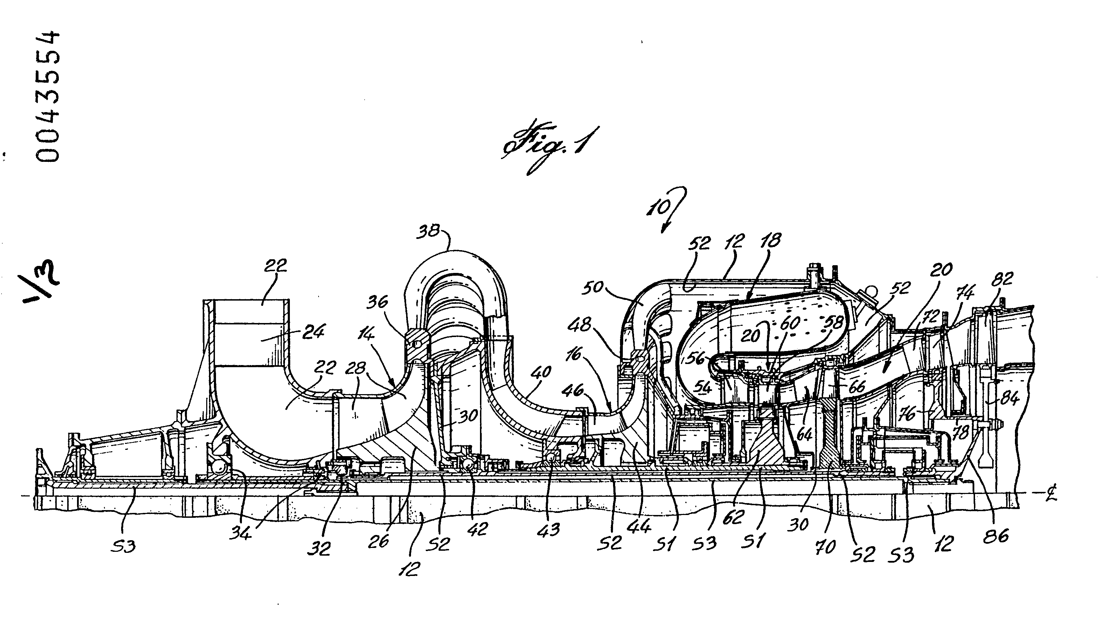

Figure 1 shows the compressor and turbine section of a typical gas turbine engine of a type which will develop approximately 1500 horsepower (1119 kW) and which will weigh no more than 800 lb (363 kg). As can be seen, the gas turbine engine, as shown in the drawings, is considerably smaller than the type of engines illustrated in certain of the prior art, including the large fan type engines such as shown in U.S. Patent 3,729,957, for instance.

Referring to Figure 1, there is provided in series a first centrifugal compressor 14 which is the low pressure stage, and a downstream high pressure centrifugal compressor 16 feeding a combustion chamber 18. The turbine section 20 is located concentrically of the combustion chamber 18.

Referring now more specifically to the low pressure compressor section 14, there is provided an annular air intake 22 provided with struts 24. The compressor includes a centrifugal impeller 26 fixed to a hollow shaft S2 and mounting a plurality of centrifugal compressor blades 28. A centrifugal diffuser of the conventional diffuser type may be provided at the outlet of the centrifugal compressor 14, but in this embodiment, a series of diffuser pipes 38 communicate with the diffuser 36 which in turn direct the compressed fluid to the ducts 40 at the inlet of the high pressure compression chamber 16.

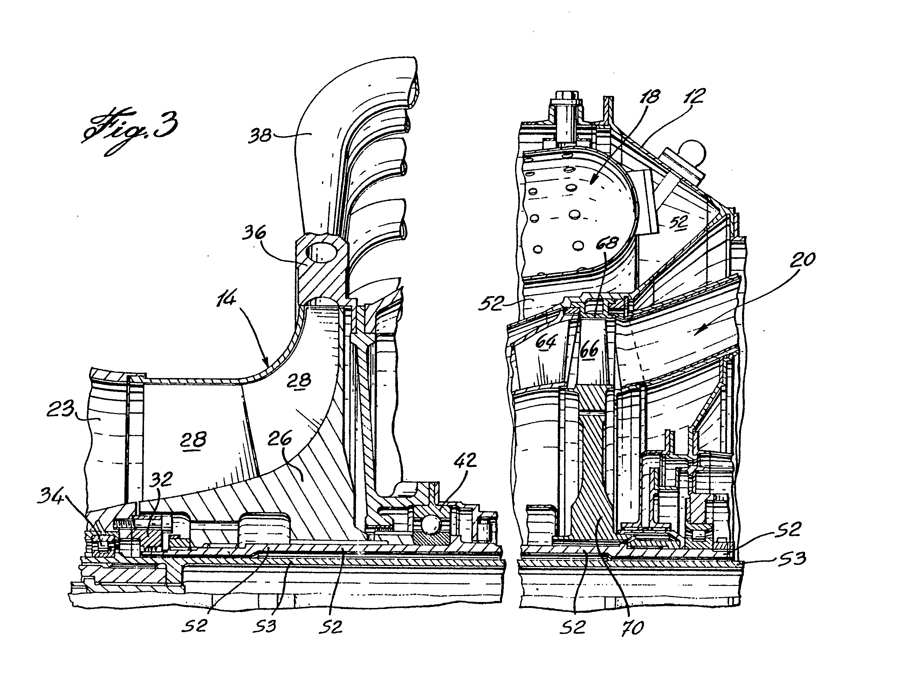

As will be described in more detail, there are three concentric hollow shafts S1, S2 and S3 extending along the central axis of the engine. Impeller 26 is fixed to one end of the intermediate shaft S2, while the surrounding framing 30, supporting the diffuser 36 and the pipes 38, support shaft S2 by means of bearing 42. The framing supporting the inlet duct 22 also supports shaft S1 by means of bearings 34. Appropriate seals, as illustrated at 32 in Figure 3, are located at the interface between moving and fixed parts of the engine.

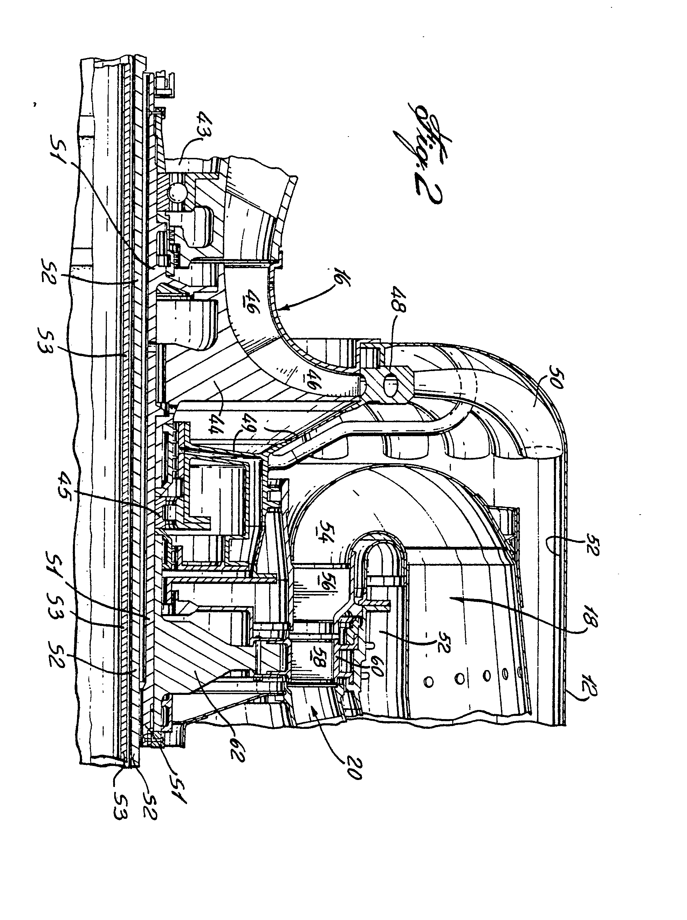

The high pressure compressor 16 is similar, but on a smaller scale than the compressor 14. The exhaust of the low pressure compressor 14 is channeled through the ducts 40 to the inlet of the centrifugal compressor 16 which mounts blades 46. The impeller 44 of the compressor 16 is mounted directly to a hollow shaft S1 supported by bearings 43 and 45, as shown in Figure 2. A peripheral tangential diffuser 48 is provided about the radial exit of the centrifugal compressor 16, and a plurality of diffuser pipes 50 are provided directing the high pressure compressed fluid from the high pressure compressor 16 to the annular airflow passage 52 about the combustion chamber 18.

The hot gases emanating from the combustion chamber 18 pass through the hot air passage 54 by the stators 56 and encounter the first turbine stage made up of a rotor wheel 62 mounting turbine blades 58 surrounded by a fixed shroud 60. The rotor wheel 62 is fixed to the shaft S1 which in turn mounts the impeller 44, as shown in Figure 2. Accordingly, the turbine blades 58 and rotor wheel 62 drive the high pressure compressor 16 as the shaft S1 rotates independently of the shafts S2 and S3.

Downstream of the passage 54, the hot gases encou... stator vanes 64 and then a second turbine stage made up of the rotor 70 and turbine blades 66 surrounded by a fixed shroud 68. As can be seen from Figures 1 and 3, the rotor 70 is fixed to the shaft S2 to which the impeller 26 is also mounted. Accordingly, the second turbine stage, including the turbine blade 66, drives the impeller 26, that is, the low pressure compressor, independently of the speed or velocity of the high pressure compressor.

Still further downstream in the hot gas passage 54 of the turbine section 20, the hot gases encounter stator vanes 72 followed by a third turbine stage made up of the rotor wheels 76 mounted to framing 78 and 86. The rotor 76 mounts turbine blades 74, while a rotor 84 mounts turbine blades 82. Both turbine rotors 76 and 84 are connected through framing 86 to the innermost shaft S3 which is adapted to provide a motive force. This third stage is known as the power stage as it is from this stage that mechanical power is transmitted.

As can be seen, therefore, from the drawings and the above description, the engine comprises two compressor spools and a power spool with both compressors 14 and 16 being centrifugal compressors with the high pressure compressor 16 being much smaller in size than the low pressure compressor 14. On the other hand, both compressors include relatively short blades which are more rigid than the eqivalent axial compressors which would have much smaller blades, and thus can function more efficiently in the airflow. Further, the fact that both centrifugal compressors have both horizontal and vertical components, the overal length of the two spool engine, would be much shorter than an equivalent two spool axial compressor configuration. The size and relative sturdiness of the blades on the impellers 26 and 44 make the ingestion, for instance, in the low pressure compressor 14, much more acceptable than if equivalent small axial compressor blades were being used. The annular duct 22, which has a relatively radial component, would be covered by a screen, and thus the air intake being at 90° to the axis of the engine and of the general airflow in the engine, would be less likely to ingest grit than conventional intakes.

It has been found that the particular configuration described hereinabove allows compression ratios of above 15:1 even in such small engines where compression ratios above 12:1 were hardly considered, and it was more normal to work with compression ratios of 6:1, for example. As discussed above, it is easier to obtain high compression ratios in the two spool axial compressor device described in the larger engine sizes as illustrated from the prior art than in scaled-down, almost miniaturized engines of the type with which the present invention is concerned.

C L A I M S

1. A gas turbine engine comprising an inlet (22) for admitting air into the engine, a low pressure centrifugal compressor (14) mounted on a first shaft (S2), diffuser means (36) extending circumferentially about the centrifugal compressor, duct means (38) for redirecting the compressed fluid exhausting from said diffuser to the axial inlet of a second high pressure centrifugal compressor (16), said second centrifugal compressor being mounted on a second shaft (S1) concentric with the first shaft (S2), diffuser means (48, 50) extending circumferentially about the second centrifugal compressor, means (52) directing said compressed fluid to an annular combustion chamber (18) surrounding said shaft, a first turbine rotor (62) mounted on said second shaft (S1) and forming a spool with said second shaft and said second centrifugal compressor (16), a second turbine rotor (70) mounted on said first shaft (S2) and driving said first centrifugal compressor (14) such that higher compression ratios are possible in turbine engines of the type developing below 4000 horsepower (2983 kW).

2. A gas turbine engine as defined in claim 1, wherein a power turbine (76, 74) is provided downstream of the first and second turbines and is mounted to a third concentric shaft (S3) and is adapted to provide mechanical work.

3. A gas turbine engine as defined in claims 1 or 2, wherein the air inlet (22) is at 90° to the axis of the engine.

4. A gas turbine engine as defined in any preceding claim, wherein the first and second compressors each have an impeller fixed to the respective shafts and a plurality of blades mounted to the impellers, each blade having an axial component and a radial component and at least some of the blades having an extent at least equal to the extent of the impeller surface on which the compressor blades are mounted.

5. A gas turbine engine as defined in claim 4, wherein the centrifugal compressor of the second compressor (16) is much smaller than the centrifugal compressor in the first compressor stage (14).

6. A gas turbine engine as defined in claim 4, wherein the diffusers are tangential diffuser rings (36, 48) surrounding the radial outlet of the compressors (14, 16) and a plurality of diffuser pipes (38, 50) extend and redirect the airflow from the diffuser rings.

0043554

Fig. 1

Fig. 2

Fig. 3

2/3

0043554

## DOCUMENTS CONSIDERED TO BE RELEVANT

| Category | Citation of document with indication, where appropriate, of relevant passages | Relevant to claim |
|---|---|---|
| X | GB - A - 689 353 (LYSHOLM)<br><br>* page 2, line 85 to page 3, line 13 * | 1,4,5 |
| X | GB - A - 724 176 (PARSONS)<br><br>* page 1, lines 17-25; page 2, lines 1-15, 89-130; page 3, lines 1-8 * | 1,3,4,6 |
| X | US - A - 2 050 349 (LYSHOLM)<br><br>* page 2, left-hand column, line 63 to line 46 of the right-hand column; page 3, left-hand column, lines 19-40; figures 4-5 * | 1,2,4 |
| X | GB - A - 947 604 (FORD)<br><br>* page 1, line 34 to page 4, line 123 * | 1,2,4,5 |
| | US - A - 2 895 295 (CARLSON)<br><br>* the whole document * | 1,4,5 |
| A | GB - A - 396 622 (MILO) | |
| A | US - A - 3 771 312 (WIRTH) | |
| A | FR - A - 1 126 906 (KOVATS DE KEZDIVASARHELY) | |

CLASSIFICATION OF THE APPLICATION (Int. Cl.³)

F 02 C 3/08
3/10

TECHNICAL FIELDS SEARCHED (Int. Cl.³)

F 02 C

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 01-10-1981 | IVERUS |

EPO Form 1503.1   06.78